# EUROPEAN PATENT SPECIFICATION

(11) **EP 0 643 908 B1**
(45) Date of publication and mention of the grant of the patent: **24.03.1999**
(21) Application number: 94203288.9
(22) Date of filing: 20.09.1989
(51) Int. Cl.: A01J 7/00

(54) **An implement for milking animals**
Vorrichtung zum Melken eines Tieres
Dispositif de traite d'un animal

(30) Priority: 21.09.1988 NL 8802332
(43) Date of publication of application: 22.03.1995
(62) Divisional of application: 91203326.3
(73) Proprietor: C. van der Lely N.V., 3155 PD Maasland (NL)
(72) Inventor: van der Lely, Edwin, NL-3155 PD Maasland (NL); van den Berg, Karel, NL-2971 BR Bleskensgraaf (NL)
(74) Representative: Corten, Maurice Jean F.M.

(56) References cited:
- EP-A- 0 188 303
- EP-A- 0 300 582
- EP-A- 0 329 248
- WO-A-85/02973
- FR-A- 2 595 197
- GB-A- 2 007 486

## Description

The present invention relates to an implement such as disclosed in EP-A-300582, for milking animals, according to the preamble of claim 1.

Such an implement is known from GB-A-2007486. In suchlike implements, it may occur that the robot arm is charged to much, e.g. when an animal kicks against it, so that the robot arm can be damaged.

In order to overcome this disadvantage, the implement, as described in the opening paragraph, is characterized by the features of claim 1.

A milking implement with deflecting means to render a robot arm end portion to change its position is known per se from FR-A-2595197. In the implement in said document, separate robot arm end portions extending in different directions are present, each thereof carrying a teat cup, while the deflecting means are constituted by a springlike element taken into each of said robotarm end portions.

According to a particular embodiment of the invention, the deflecting means comprise a pivoting element between two robot arm portions, while a springlike element is provided acting against a force exerted on the robot arm end portion in the downward direction. In order to realize a slight tilting of the robot arm end portion during the movement provoked by the deflecting means, in the operative position of the robot arm end portion under the animal, the deflecting means are located outside the milking parlour.

In a favourable construction, additional deflecting means are able to control the relevant robot arm portions. In that case, the robot arm may be controlled by means of operating cylinders which render the respective robot arm portions to move in a substantially horizontal plane when e.g. an animal kicks against them. Also, the robot arm may be controlled by means of a further operating cylinder which renders the robot arm to move downwardly when e.g. an animal kicks against it. The operating cylinders may be constituted by pneumatically operable cylinders or hydraulically and/or electromagnetically operable cylinders having an overload protection.

For a better understanding of the present invention and to show how the same may be carried into effect, reference will now be made, by way of example, to the accompanying drawings, in which:
Figure 1 is a side view of a robot arm arranged at the side of a milking parlour;
Figure 2 is a plan view of the robot arm;
Figure 3 is a side view of part of the robot arm as shown in Figure 2;
Figure 4 is a plan view of the end of the robot arm;
Figure 5 is a side view of the robot arm end as shown in Figure 4;
Figure 6 is a partial cross-sectional view taken on the line VI - VI in Figure 4;
Figure 7 shows a laser arrangement with associated electric and electronic elements;
Figure 8 shows a diagram in illustration of the position of the teats relative to the parameters describing the laser;
Figure 9 shows a block diagram of a circuit for controlling the connection of the teat cups to the teats of an animal's udder;
Figure 10 shows a flow diagram of the teat searching procedure effected in the microprocessor constituting part of the circuit shown in Figure 9, and

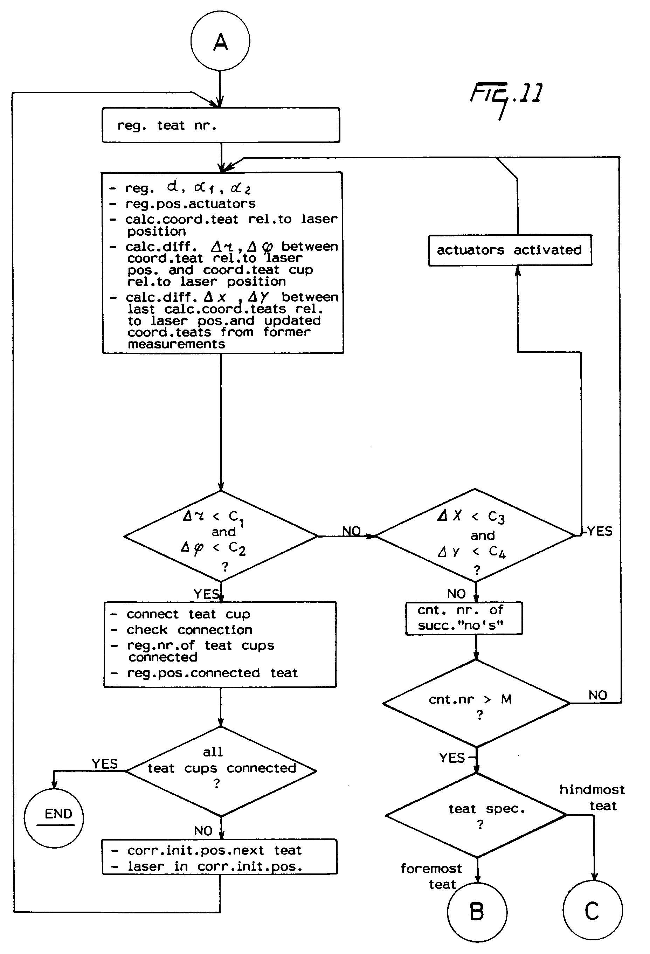

Figure 11 shows a flow diagram of the teat tracking procedure effected in the microprocessor constituting part of the circuit shown in Figure 9.

In the drawings, corresponding components have been denoted by the same reference numerals. In addition, the invention is not limited to the embodiment as shown and described here, which embodiment only serves to illustrate the inventive idea.

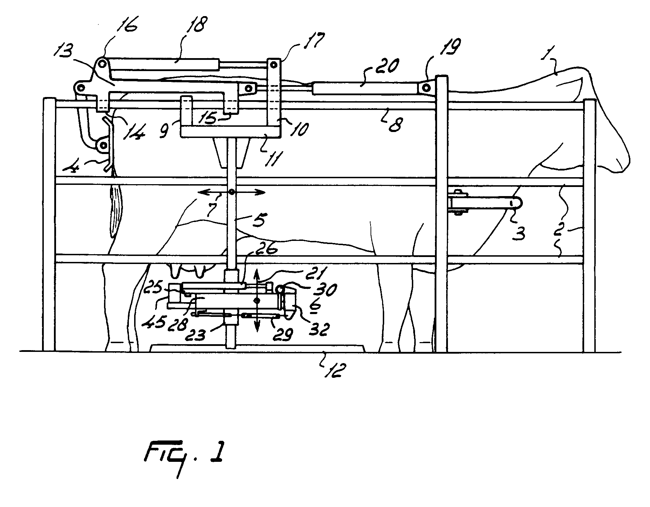

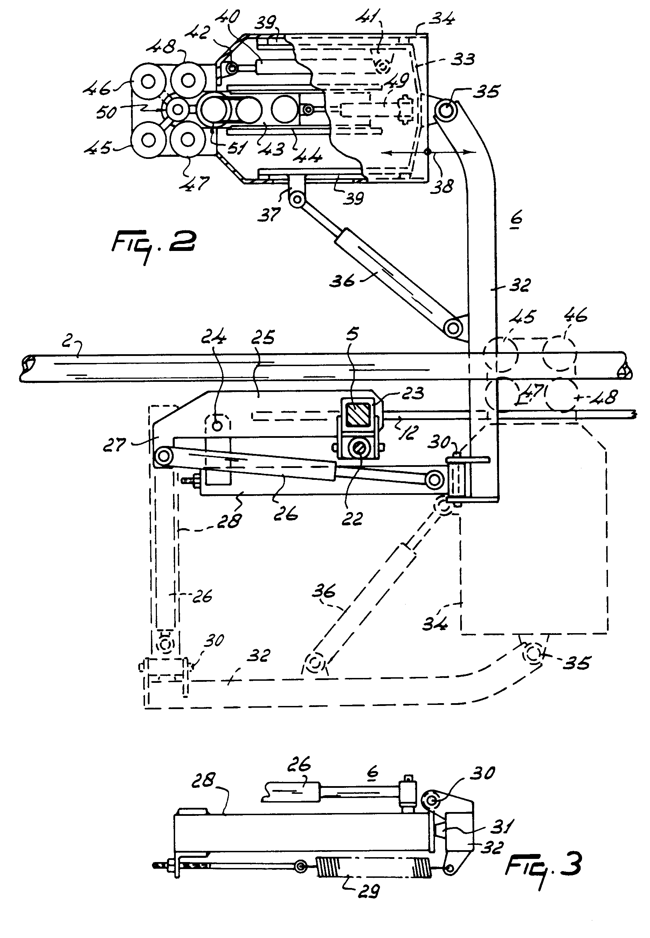

In Figures 1 and 2, the robot arm according to the invention is shown; this robot arm is arranged at the side of a milking parlour. Once an animal to be milked has arrived in the milking parlour and has been positioned appropriately therein, the robot arm is moved, on the basis of animal recognition data, from the front side to under the animal's udder.

In the side view of the implement of Figure 1 there is shown an animal 1 which is present in the milking parlour, the milking parlour being enclosed by a railing 2 which limits the freedom of movement of the animal 1 in a lateral direction. The milking parlour is entered by the animal from the rear, while a pivotal stop 3 is arranged near the front side, which stop 3 constitutes a boundary for the animal 1 in the forward direction. By providing the front side of the milking parlour with e.g. a feed unit, the animal will advance sufficiently far, i.e. until against the stop 3.

The milking parlour floor has a recess, which is arranged such that the animal will not put her hind feet thereon, e.g. because its bottom extends obliquely inwardly and downwardly, so that the hind legs of the animal are wide apart and on either side of the recess. The recess may have a drain for discharging the animal's excrements, if any.

Once the animal has entered the milking parlour, a sensor device 4 is pivoted against her rear side. At the side of the milking parlour there is arranged a substantially vertical frame beam 5, which frame beam 5 at its upper end is provided with a longitudinal guide means and to which near its lower end a robot arm 6 is fitted. The vertical frame beam 5 is capable of moving with respect to the milking parlour in the longitudinal direction as denoted by the arrows 7. For that purpose, the railing is provided with a guide rod 8, along which can move two interconnected slide blocks 9, 10, the said slide blocks 9, 10 being interconnected by means of a horizontal frame beam 11 secured to the vertical frame beam 5. Near the floor, the frame beam 5 is guided by a guide rail 12, along which the lower portion of frame beam 5 slides.

The sensor device 4 is connected pivotably to a slide element 13 which by means of two slide blocks 14, 15 is arranged also slidably along the guide rod 8. Between two lugs 16, 17 there is arranged, rigidly connected to the slide element 13 and the slide block 10, respectively, a cylinder 18, while furthermore between the slide element 13 and a support 19 on the railing 2 there is arranged a cylinder 20. By operating the cylinder 20, the sensor device 4 can be moved towards the animal until, in the downward position, it bears against the animal's rear. In the present embodiment, the sensor device, and hence the animal's rear, determines the reference position, relative to which the position of the teats and that of the milking robot are determined. By moving the sensor device 4 towards the animal, it is also possible to move the frame beam 5, as a result of which the mutual positioning between the sensor device 4 and the frame beam 5 can be provided adjustably by means of the cylinder 18.

A robot arm 6 is connected slidably in height (arrows 21) to the frame beam 5. The sliding movement in height is effected by means of a cylinder 22, the one end of which is connected to the frame beams 5 and 11 in the place where the said frame beams are interconnected. The other end of the cylinder 22 is connected to a slide block 23 which is capable of moving in height along the frame beam 5 in dependence on the operation of the cylinder 22.

Figure 2 shows the robot arm 6 both in the rest position (interrupted lines) and in the operational position (uninterrupted lines). The robot arm 6 is connected capably of pivoting about a substantially vertical pivot pin 24 to the frame portion 25 which is attached to the slide block 23. This pivotal movement is effected by means of a cylinder 26 which has one end connected to a support 27 of the frame portion 25 and the other end to the first portion 28 of the robot arm 6. It will be obvious that, by operating the cylinder 26, the robot arm 6 can be pivoted from the rest position to the operational position and vice versa. The teat cups carrying end portion of the robot arm is fixed under spring load, i.e. in such a manner that the said portion can deflect when e.g. the animal kicks against it. In this embodiment, this can be achieved by having the further portion of the robot arm 6 arranged capably of pivoting relative to the first portion thereof about a pin 30 against the action of an excess load spring 29. In the unloaded condition, the further portion of the robot arm 6 is pulled against the first portion 28 of the robot arm 6 by the intermediary of a rubber buffer 31 (see Figure 3).

The further portion of the robot arm 6 consists of a second portion 32, a third portion 33 and a fourth portion 34. The third portion 33 of the robot arm 6 is connected capably of pivoting about a pivot pin 35 to the said second portion 32. The pivotal movement about the pivot pin 35 is effected by means of a cylinder 36, the one end of which is connected to the second portion 32 of the robot arm 6 and the other end to a support 37 on the third portion 33 of the robot arm 6. As is apparent from Figure 2, by means of the cylinder 26, the robot arm can be moved to under the animal present in the milking parlour, the pivot pin 35 being approximately in a central position under the animal, i.e. between the animal's front and rear legs. Thereafter, by operating the cylinder 36, the third portion 33 of the robot arm 6 can be pivoted about the pivot pin 35 at a desired angle.

The fourth portion 34 of the robot arm 6 (i.e. the end thereof) is movable axially relative to the third portion 33, as is indicated by arrows 38. In this connection, the support 37 is movable in a slot-shaped aperture provided on the side of the fourth portion 34 of the robot arm 6.

In the inserted condition, the third portion 33 of the robot arm 6 is located partly within the end 34 of the robot arm 6. The end 34 of the robot arm 6 being slidable relative to the third portion 33, it is provided with rails 39. Between the mutually slidable portions 33 and 34 there is arranged a cylinder 40, the one end of which is connected via a support 41 to the third portion 33 of the robot arm 6 and the other end via a support 42 to the end 34 thereof.

The end 34 of the robot arm 6 can be adjusted in the longitudinal direction under the animal by means of both the cylinder 40 and the cylinder 18. Although in this connection it would be sufficient to use the cylinder 40, it will be possible, by the addition of the cylinder 18, to limit the stroke of the former considerably, which, in view of the restricted space under the animal, is highly advantageous.

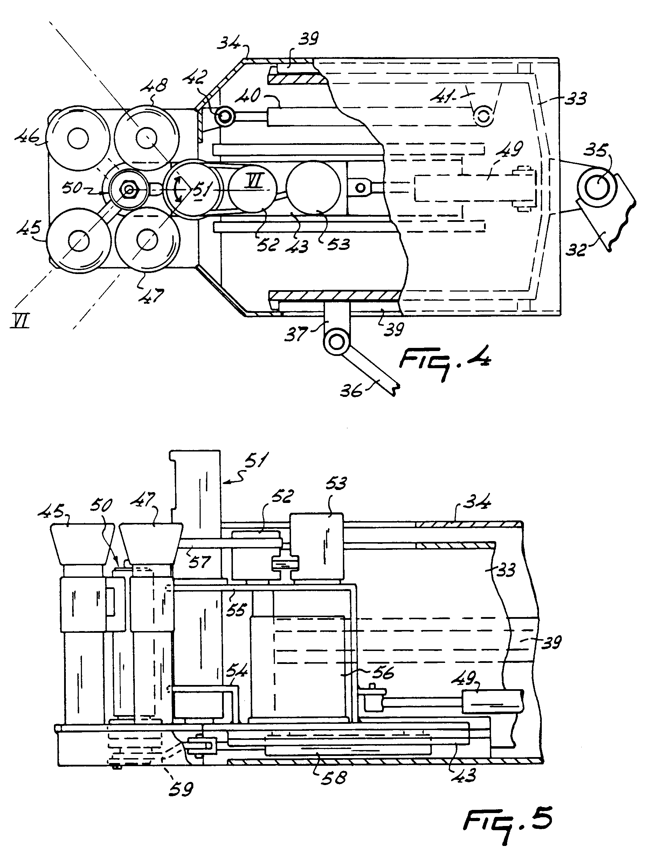

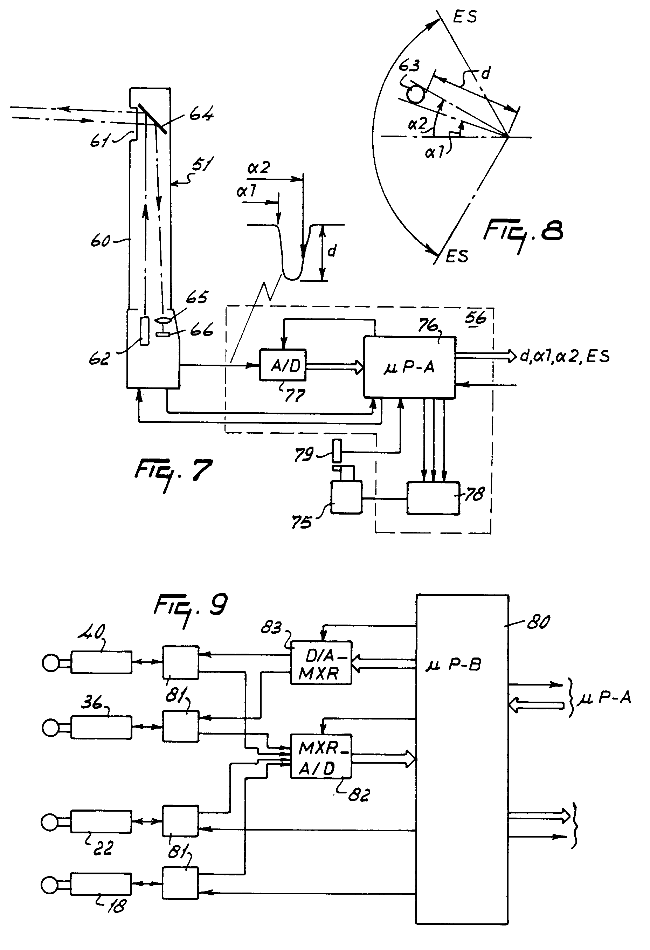

The end 34 of the robot arm 6 is provided with a slide 43 which by means of rails 44 is movable along the robot arm end 34 in the longitudinal direction. Teat cups 45, 46, 47 and 48 are provided at the end 34 of the robot arm 6, in which situation, since the robot arm 6 approaches the animal's udder from the front side, the teat cups 45 and 46 are intended for connection to the animal's rear teats and the teat cups 47 and 48 to the front teats. The teat cups 45 to 48 are arranged such that the slide 43 can move at least between the teats cups 47 and 48. The slide 43 is capable of reciprocating by means of a cylinder 49, one end of which is connected to the slide 43 and the other end to the end 34 of the robot arm 6. On the slide there are provided, taken from the left to the right in Figure 4: coupling means 50, sensor means 51, a pivotal mechanism 52 and a stepper motor 53, the last two units together constituting the pivotal means for the sensor means 51. In the embodiment shown in Figure 7, these pivotal means are constituted by a bi-directionally controlable stepper motor. The sensor means 51 are secured on the slide 43 by means of supporting plates 54 and 55 (see Figure 5). The pivotal means 52, 53 are arranged on the supporting plate 55. In addition, the slide 43 is provided, under the supporting plate 55, with the sensor electronics 56 required for the sensor means 51.

The sensor means 51 are mounted such that they are pivotal through a pivotal angle which extends symmetrically relative to the longitudinal direction of the robot arm end 34, which angle in the embodiment is approximately 120°. The sensor means 51 are reciprocated by the pivotal means 52, 53 through the pivotal angle in approximately 0.5 second. The stepper motor 53 drives the pivotal mechanism 52, while the pivotal mechanism 52 causes the sensor means 51 to reciprocate with the aid of a belt 57. In addition, under the slide 43 there is arranged a cylinder 58 with the aid of which, with the intermediary of a pivotal mechanism 59, the coupling means 50 can be reciprocated through a pivotal angle which also extends symmetrically relative to the longitudinal direction of the robot arm end 34, which angle in the embodiment is approximately 90°. After the robot arm end 34 has been positioned approximately below the animal's udder, the sensor means 51 can determine the position of the front teats, when the slide 43 has been adjusted to a first position; the position of the slide 43 is then also that wherein, during the coupling procedure, the coupling means 50 can engage the teat cups 47 and 48 in order to connect same to the front teats. When thereafter the slide 43 is moved forwards, it can arrive in a second position in which by means of the sensor means 51 the position of the rear teats can be determined and in which the coupling means 50 subsequently can engage the teat cups 45 and 46 in order to connect same to the rear teats. This situation is illustrated in Figures 3 to 5. In both the first (front) and the second (rear) position of the slide 43, the coupling means 50 can only engage the teat cups 47, 48, respectively 45, 46, individually. In both positions, the cylinder 58 and the pivotal mechanism 59 can first adjust the coupling means to a position wherein they can, for example, engage the respective teat cups 45 and 47 and thereafter to a position wherein they can engage the respective teat cups 46 and 48. The sensor means 51 continue to be permanently operative in order to detect the teat positions located within the pivotal angle, even during the subsequent upward movement of the teat cups 45 to 48.

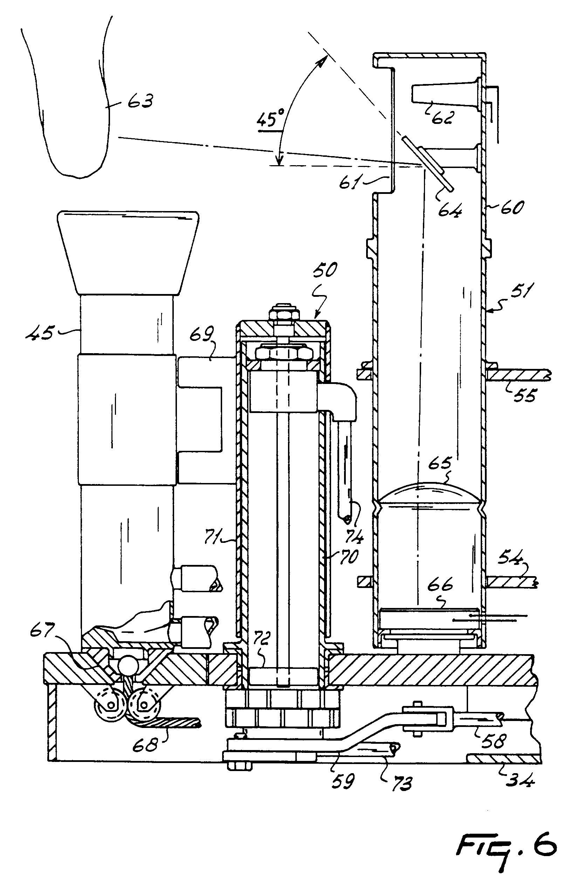

Figure 6 shows the sensor means 51 in further detail; they comprise a housing 60 constituted by a cylindrical sleeve and provided with a laser-transparant window 61 near its upper end. Behind the window 61 there is arranged a transmitter element 62 constituted by a laser, which transmitter element 62 is controlled from the sensor electronics 56. The use of a laser for the sensor means 51 has the advantage that hereby a much narrower scanning beam as well as a much higher data rate can be obtained. Therefore, the transmitter element 62 is capable of transmitting continuously a narrow scanning beam to determine the position of a teat 63. This teat 63 disperses and/or reflects the radiation transmitted by the transmitter element 62. Via the window 61, a fraction of the radiation returns into the housing 60 and is deflected downwardly by a reflecting element 64, constituted by a flat mirror and located behind the window 61, and is guided to a receiver element 66 including a diode detector via a converging lens 65 accommodated in the housing 60. The region on the receiver element 66 where the captured beam is focused to a greater or lesser extent, is decisive for the sensor means-teat distance. The signal applied by the receiver element 66 to the sensor electronics 56 is indicative of this focusing region. In the present embodiment, the beam transmitted by the transmitter element 62 extends sub stantially horizontally and the mirror is arranged at an angle of approximately 45°. The angular position of the teat 63 relative to the robot arm end 34 can further be determined from the time interval in which the reflections are received from the teat 63 during the reciprocating movement of the sensor means 51. From the detected position of a teat 63 with respect to the robot arm end 34 signals are generated by control means (to be described in further detail hereinafter) to adjust the robot arm end 34 to such a position that a relevant teat cup can be connected to the teat 63 by moving it upwardly.

As soon as the robot arm end 34 has arrived in the desired position, a relevant teat cup can be connected. In the present embodiment, the teat cups 45 to 48 bear on the robot arm end 34 in tapering recesses 67. The teat cups 45 to 48 are kept in position therein by flexible connecting members 68 which are coupled to cylinders (not shown) in the fourth part 34 of the robot arm 6. The teat cups 45 to 48 can then be moved freely upwardly and are pulled down again by the said cylinders in their positions in the tapering recesses 67 when the supply of milk stops. The upward movement of the individual teat cups is effected by the coupling means 50 which are provided with an electromagnet 69 which, after having been energized, can engage the teat cup to which the electromagnet 69 is directed at that instant. By rotation of the coupling means 50 and by a change in the position of the slide 43, the electromagnet 69 can be directed to the other teat cups which can then be engaged after energizing of the electromagnet 69. The coupling means 50 include a vertical inner jacket 70 which is connected rigidly to the slide in the upward direction; this inner jacket 70 can be rotated by the pivotal mechanism 59 through the said pivotal angle of, in this embodiment, 90°. The inner jacket 70 is surrounded by an outer jacket 71 which can move only in upward and downward direction. The electromagnet 69 is connected rigidly to this outer jacket 71. The outer jacket 71 is connected rigidly to a piston 72 which extends through the coupling means 50. Compressed air can be applied in the space under the piston 72 via a compressed air supply pipe 73, whereby the outer jacket 71 and the electromagnet 69 connected thereto and the teat cup engaged thereby are moved upwardly. The pressure exerted by the compressed air is such that, as soon as the teat cup contacts the cow's udder and, therefore, a certain counter-pressure is exerted, the upward movement of the teat cup is stopped. When a teat cup has been connected to the relevant teat 63, the electromagnet 69 is de-energized and, consequently, the teat cup is no longer retained thereby. Subsequently, compressed air can be passed into the space above the piston 72 via the compressed air supply pipe 74, as a result of which the outer jacket 71 with the electromagnet 69 connected thereto can be moved downwardly; in this connection, the pressure on the supply pipe 73 must, of course, be less than that on the supply pipe 74.

Figure 7 shows a second arrangement of a laser with the associated sensor electronics 56. In this case, both the laser 62 and the diode detector 66 with associated electronics are arranged in the lower part of the housing 60. For the pivotal movement of the sensor means 51, the pivotal means are constituted here by a bi-directionally controllable stepper motor 75. The sensor electronics 56 is constituted here by a microprocessor 76, an analog-digital converter 77 and a control circuit 78. The laser 62 is activated from the microprocessor 76. When, during its pivotal movement, the laser moves across an object, such as the teat of an animal's udder, then by the diode 66 there is supplied a signal which is determined by three parameters: the distance d from the sensor means 51 to the object, and the angles α₁ and α₂ which indicate the initial angle and the final angle, respectively, of the laser beam moving across the object; these parameters are shown in Figure 8. The distance d determines the focusing position of the reflected/dispersed laser beam on the diode detector, while the position on the diode detector determines the amplitude of the signal supplied thereby (Figure 7). The angles α₁ and α₂ are determined by the position of the sensor means 51 at the moment when, during its pivotal movement, the laser beam establishes the "beginning" and the "end" of the object; since a pivotal movement, and hence the beginning of a next one, is signalled each time by a signal ES (End Scan), the angles α₁ and α₂ can de determined by establishing each time the score of the counter, wherein is counted the number of steps made by the stepper motor 75 until the occurrence of the edges of the signal from the diode detector. The magnitude of d, α₁ and α₂ is determined in the microprocessor 76; for that purpose, the signal from the diode detector 66 is supplied via the analog-digital converter 77 to the microprocessor 76; with the aid of the latter, the sample frequency of the analog- digital converter 77 is set. In addition, from the diode detector 66 there is supplied to the microprocessor 76 directly a signal indicating that the signal supplied via the analog-digital converter 77 should not be considered a valid one; this signal has a threshold function. The stepper motor 75 is controlled from the microprocessor 76. In this connection, use is made of a control circuit 78, to which are supplied from the microprocessor 76 the following signals: an on/off-signal, a signal for determining the rotational direction of the stepper motor 75, and a series of pulse-shaped signals, of which the number per unit of time determines the rotational speed of the stepper motor 75. The stepper motor 75 includes an inductive recording element 79 for establishing a reference position thereof. When the stepper motor 75 passes this reference position, a signal is supplied by the inductive recording element 79 to the microprocessor 76; this signal is of importance in determining the correct moment at which the various signals are supplied to the control circuit 78.

The microprocessor 76 is activated by a second microprocessor 80 (see Figure 9); to this second microprocessor 80 are supplied the values d, α₁ and α₂, as well as the signal ES permanently on interrupt-basis. Each time when on interrupt-basis the data d, α₁ and α₂ and ES are supplied to the second microprocessor 80, the latter sees to it that the position of the cylinder is established. In the second microprocessor 80 are realized the "searching procedure" for roughly determining the position of the teats of the animal's udder relative to a reference position, the "tracking procedure" for accurately determining the position of the teats of the animal's udder relative to a reference position, the control movement by the end of the robot arm to this accurately tracked position, and the connecting of the teat cups. "Roughly determined" does not imply that an inaccurate measurement is made, but that the measurement registers an instantaneous indication; for the teat will be moving continuously.

In determining the position of the teats of the animal's udder, the position of the cylinders 18, 22, 36 and 40 is of importance. Each of these cylinders is provided in a known per se manner with control electronics 81. In roughly adjusting the end 34 of the robot arm 6 in the centre below the animal, the cylinders 18 and 22 are utilized. The adjustment in the longitudinal direction is determined roughly by means of the cylinder 18, while by means of the cylinder 22 is determined roughly the height. The cylinder 22 is also utilized for a searching movement performed by the sensor means 51. In accurately determining and tracking, the cylinders 36 and 40 are utilized. At any moment determined by the microprocessor 80, the actual position of the cylinders 18, 22, 36 and 40 can be supplied via the multiplexer/analog-digital converter 82 to the microprocessor 80 and be registered in memory means thereof. Conversely, at any moment determined by the microprocessor 80, the desired position of the cylinders 36 and 40 can be supplied via the converter/multiplexer 83 to these cylinders 36 and 40. With respect to the cylinders 18 and 22, it will suffice to supply from the microprocessor 80 only two signals to the relevant control electronics 81; by means of these signals can be indicated whether the cylinders 18 and/or 22 have to be activated or stopped, and in what direction the cylinders have to control the end 34 of the robot arm 6. Besides in roughly adjusting the end 34 of the robot arm 6, the cylinder 22 is also utilized in moving the laser in the vertical direction, and hence the end 34 of the robot arm 6 during the "searching procedure" to be described hereinafter. Although this is not of importance here, the further operating units, too, are controlled by the microprocessor 80. The cylinders 18, 20, 22, 26, 36, 40, 49 and 58 can be operable either hydraulically, pneumatically or electromagnetically. Insofar as hydraulically or electromagnetically operable cylinders are utilized, it is strongly desirable to include an additional overload protection against kicks from the animal. In a preferred embodiment, the cylinders 18 and 22 which are relevant to the determination of the position of the teats are electromagnetically operable, while the cylinders 36 and 40 are pneumatically operable, in which connection the control electronics 81 are designed such that these cylinders can reach very quickly a specific position determined by the microprocessor. Servo-pneumatic positioning elements, constituted by a pneumatic cylinder with associated control electronics, are known per se, but in the present implement, in co-operation with a laser in the sensor means, they render it possible for the teat cups to be connected to the teats in an extremely fast and efficient manner.

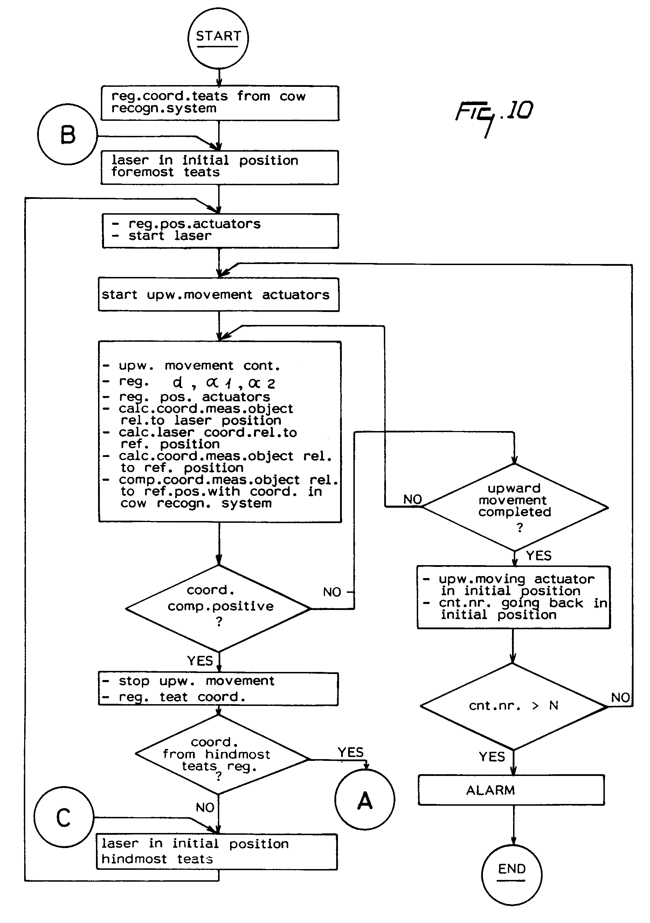

The "searching procedure" as registered in the microprocessor 80 will be set out with reference to the flow diagram of Figure 9, while the "tracking procedure" will be set out with reference to the flow diagram of Figure 10.

When the animal arrives in the milking parlour, she will be identified by means of a conventional animal recognition data source. The animal recognition is of importance to the present invention to the extent that thereby is known for each animal the position of the teats of the animal's udder relative to a fixed point on the animal, while, furthermore, this position in the animal recognition data source can be corrected, if necessary, on the basis of the continuously occurring "searching and tracking procedure". For the searching procedure to be described hereinafter it is of importance that is registered the position of the teats relative to a reference position, here a point on the animal's rear centre as determined by the sensor device 4. First of all, the end of the robot arm is brought into such a starting position that the laser, i.e. the point in the aperture of the housing wherein the laser is accommodated and from where the horizontal laser scan movement takes place, is located at a predetermined slight distance below and in the middle in front of the front teats, e.g. 50 mms below the front teats and 120 mms in the middle in front thereof. The then actual position of the cylinders is registered and the laser is started. Then, the cylinder 22 is activated, after which the robot arm end with the laser is moved upwardly, during which movement the laser performs its scanning movement, each scanning movement taking e.g. 0.25 second. During this upward movement, the values d, α₁ and α₂ for the two front teats are registered permanently, as well as the associated position of the cylinder 22. From the values d, α₁ and α₂ is calculated the position, relative to that of the laser, of the objects observed, which are not yet considered as teats. From the position of the cylinders is calculated the position of the laser relative to the reference position. On the basis of the results of the two last calculations is calculated the position of the objects observed relative to the reference position. Subsequently, this last position is compared with the data regarding this position as derived from the animal recognition data source. Should there be established an agreement within certain limits, then the objects observed are identified as the animal's front teats, this position of the front teats is registered and the upward movement of the cylinder 22 is stopped. Subsequently, the laser is positioned in the starting position below and in the middle in front of the rear teats and the above-described procedure is repeated, after which also the position of the rear teats is registered. This completes the "searching procedure". In case, during the searching procedure, no agreement within certain limits is established between the calculated position of the objects observed and the relevant data from the animal recognition data source, then the searching is continued. Then, the laser is moved higher upwardly and, after having reached its highest position of e.g. 100 mms above its starting position, returns to this starting position in order to perform another searching movement in the vertical direction. When after a number of searching movements still no teats have been identified, an alarm is operated.

After the searching procedure follows the tracking procedure, in which the teats are tracked individually in order to be able to connect a teat cup thereto. In this tracking procedure, the teats are numbered, so that a fixed order can be observed. First, one of the rear teats is tracked; the laser is already in the right starting position therefor, i.e. the position wherein the cylinder 22 has stopped during the search for the rear teats. Here again, the data flow of the laser, i.e. the values d, α₁ and α₂ as well as the position of the relevant cylinders, is registered permanently. From the values d, α₁ and α₂ is calculated continuously the position of the teat relative to the laser and therefrom the difference between the position of the teat relative to the laser and the position of the relevant teat cup relative to the laser; in the present embodiment, these differences Δr, Δϕ are determined in polar coordinates. When these differences are not slight enough, i.e. the teat cup is located not quite below the relevant teat, then the results of the last measurement are compared with the teat position corrected on the basis of the previous measurement; in the present embodiment, the magnitude of these differences is keyed in Cartesian coordinates. When these differences Δx, Δy are less than a certain value of e.g. 35 mms, then the cylinders have to be activated and the relevant teat cup, i.e. the end of the robot arm, has to be dispatched to the lastly determined teat position. This procedure is repeated until the difference between the position of the teat relative to the laser and that of the teat cup relative to the laser is slight enough, so that the teat cup is located almost straight below the relevant teat. The teat cup is then moved upwardly and connected, while by means of a vacuum under the teat it is checked whether the teat cup is connected correctly. During this upward movement of the teat cup, the tracking procedure remains active, so that even then the teat cup can be controlled yet. A vacuum may also occur when the teat cup is not connected correctly, in particular when the teat is folded and the teat cup is pressed thereagainst. Therefore, the check whether the teat cup is connected correctly can be made by means of a temperature measurement; for in the milk flow there is measured a higher temperature than thereoutside.

From the finally registered position of the teat cup at the moment of connection and the mutual position of the teats, as can be obtained from the teat position determination in the searching procedure, there can be obtained a corrected initial position of the laser for the tracking of the second rear teat. After the laser has been brought in this corrected initial position, the above-described tracking procedure is repeated and the second teat cup can be connected. Likewise, the third and fourth teat cups are connected, after which the tracking procedure is completed. When during the tracking procedure it is established that the differences Δx, Δy are too great, i.e. in the present embodiment more than 35 mms, then the relevant cylinders are not activated, the control of the teat cup is omitted and the tracking procedure is repeated. When this has been done for a number of times and the differences Δx, Δy continue to be too great, then the searching procedure is returned to, i.e. to the point where the search for the front teats or the rear teats is initiated.

The invention is not limited to the embodiment described in the foregoing. It will be obvious that two transmitter elements constituted by lasers can be used instead of one transmitter element.

## Claims

1. An implement for milking animals, such as cows, comprising a milking parlour, a robot arm (6) carrying teat cups (45 to 48) and extending in a substantially horizontal plane, coupling means (50) for applying each teat cup to a relevant teat of the animal's udder, a vertically directed frame beam along which the robot arm is movable up- and downwards, and sensor means (51) able to determine the position of the animal's teats, as well as control means (56, 18, 22, 36, 40, 80 to 83) for conveying, on the basis of the teat position as determined by the sensor means (51), the robot arm in such a position under the animal's udder that a teat cup (45 to 48) can be applied to the relevant teat, characterized in that the robot arm (6) comprises a robot arm end portion (34), carrying the teat cups (45 to 48), and a further portion, while deflecting means are provided to render said robot arm end portion (34) to move downwardly relative to the further portion, when e.g. an animal kicks against it.

2. An implement as claimed in claim 1, characterized in that the deflecting means comprise a pivoting element (30) between two robot arm portions (28, 32) and a springlike element (29) acting against a force exerted on the robot arm end portion (34) in the downward direction.

3. An implement as claimed in claim 1 or 2, characterized in that, in the operative position of the robot arm end portion (34) under the animal, the deflecting means are located outside the milking parlour.

4. An implement as claimed in claim 1 or 2, characterized in that the additional deflecting means are able to control the relevant robot arm portions (32 to 34).

5. An implement as claimed in claim 1, 2 or 4, characterized in that the robot arm (6) is controlled by means of operating cylinders (26, 36) which render the respective robot arm portions (28, 32 to 34) to move in a substantially horizontal plane when e.g. an animal kicks against them.

6. An implement as claimed in any one of claims 1, 2, 4 or 5, characterized in that the robot arm (6) is controlled by means of a further operating cylinder (22) which renders the robot arm (6) to move downwardly when e.g. an animal kicks against it.

7. An implement as claimed in claims 5 or 6, characterized in that the operating cylinders are pneumatically operable cylinders.

8. An implement as claimed in claim 5 or 6, characterized in that the operating cylinders are hydraulically and/or electromagnetically operable cylinders having an overload protection.

## Patentansprüche

1. Vorrichtung zum Melken von Tieren, wie z. B. Kühen, mit einem Melkstand, einem Roboterarm (6), der Zitzenbecher (45 bis 48) trägt und sich in einer im wesentlichen horizontalen Ebene erstreckt, mit einer Kupplungsvorrichtung (50) zum Anschließen jedes Zitzenbechers an eine zugehörige Zitze des Tiereuters, einem vertikal ausgerichteten Rahmenbalken, an dem der Roboterarm auf- und abwärts bewegbar ist, mit einer Sensorvorrichtung (51) zur Ermittlung der Position der Zitzen des Tieres sowie einer Steuerung (56, 18, 22, 36, 40, 80 bis 83), um den Roboterarm auf der Basis der von der Sensorvorrichtung (51) ermittelten Zitzenposition in eine solche Position unter dem Tiereuter zu bewegen, daß ein Zitzenbecher (45 bis 48) an die jeweilige Zitze anschließbar ist,
dadurch gekennzeichnet, daß der Roboterarm (6) ein die Zitzenbecher (45 bis 48) tragendes Roboterarmende (34) und einen weiteren Abschnitt aufweist, wobei eine Auslenkvorrichtung vorhanden ist, die bewirkt, daß sich das Roboterarmende (34) relativ zu dem weiteren Abschnitt nach unten bewegt, wenn z. B. ein Tier dagegen stößt.

2. Vorrichtung nach Anspruch 1,
dadurch gekennzeichnet, daß die Auslenkvorrichtung ein zwischen zwei Roboterarmabschnitten (28, 32) angeordnetes schwenkbares Element (30) sowie ein federartiges Element (29) aufweist, das einer auf das Roboterarmende (34) in Abwärtsrichtung ausgeübten Kraft entgegenwirkt.

3. Vorrichtung nach Anspruch 1 oder 2,
dadurch gekennzeichnet, daß in der Betriebslage des Roboterarmendes (34) unter dem Tier die Auslenkvorrichtung außerhalb des Melkstandes angeordnet ist.

4. Vorrichtung nach Anspruch 1 oder 2,
dadurch gekennzeichnet, daß die jeweiligen Roboterarmabschnitte (32 bis 34) durch eine zusätzliche Auslenkvorrichtung zu steuern sind.

5. Vorrichtung nach Anspruch 1, 2 oder 4,
dadurch gekennzeichnet, daß der Roboterarm (6) durch Arbeitszylinder (26, 36) gesteuert wird, von denen die jeweiligen Roboterarmabschnitte (28, 32 bis 34) in einer im wesentlichen horizontalen Ebene bewegt werden, wenn z. B. ein Tier gegen sie stößt.

6. Vorrichtung nach einem der Ansprüche 1, 2, 4 oder 5,
dadurch gekennzeichnet, daß der Roboterarm (6) mittels eines weiteren Arbeitszylinders (22) gesteuert wird, von dem der Roboterarm (6) nach unten bewegt wird, wenn z. B. ein Tier gegen ihn stößt.

7. Vorrichtung nach den Ansprüchen 5 oder 6,
dadurch gekennzeichnet, daß die Arbeitszylinder pneumatisch zu betätigende Zylinder sind.

8. Vorrichtung nach Anspruch 5 oder 6,
dadurch gekennzeichnet, daß die Arbeitszylinder hydraulisch und/oder elektromagnetisch zu betätigende Zylinder sind, die einen Überlastungsschutz aufweisen.

## Revendications

1. Dispositif de traite d'animaux, tels que des vaches, comprenant une stalle de traite, un bras de robot (6) portant des godets de trayons (45 à 48) et s'étendant dans un plan sensiblement horizontal, des moyens de couplage (50) pour relier chaque godet de trayon à un trayon correspondant du pis de l'animal, une poutre de châssis dirigé verticalement, le long de laquelle le bras de robot est mobile de bas en haut et de haut en bas, et des moyens capteurs (51) aptes à déterminer la position de trayons de l'animal, ainsi que des moyens de commande (56, 18, 22, 36, 40, 80 à 83) pour entraîner, d'après la position des trayons telle que déterminée par les moyens capteurs (51), le bras de robot en une telle position sous le pis de l'animal qu'un godet de trayon (45 à 48) puisse être relié au trayon correspondant, caractérisée en ce que le bras de robot (6) comprend une partie terminale(34) du bras de robot, portant les godets de trayons (45 à 48), et une autre partie, tandis que des moyens déflecteurs sont prévus pour provoquer un mouvement de ladite partie terminale (34) du bras de robot vers le bas par rapport à l'autre partie, par exemple quand un animal lui lance un coup de pied.

2. Dispositif selon la revendication 1, caractérisé en ce que les moyens déflecteurs comprennent un élément de pivotement (30) entre deux parties (28, 32) du bras de robot et un élément (39) analogue à un ressort agissant contre une force exercée sur la partie terminale (34) du bras de robot dans la direction vers le bas.

3. Dispositif selon la revendication 1 ou 2, caractérisé en ce que, dans la position de travail de la partie terminale (34) du bras de robot sous l'animal, les moyens déflecteurs sont situés à l'extérieur de la stalle de traite.

4. Dispositif selon la revendication 1 ou 2, caractérisé en ce que des moyens déflecteurs supplémentaires sont aptes à commander les parties (32 à 34) correspondantes du bras de robot.

5. Dispositif selon la revendication 1, 2 ou 4, caractérisé en ce que le bras de robot (6) est commandé au moyen de vérins actionneurs (26, 36) qui mettent la parties respectives (28, 32 à 34) du bras de robot en mouvement dans un plan sensiblement horizontal, par exemple quand un animal leur lance un coup de pied.

6. Dispositif selon l'une quelconque des revendications 1, 2, 4 ou 5 , caractérisé en ce que le bras de robot (6) est commandé au moyen d'un autre vérin actionneur (22) qui met le bras de robot (6) en mouvement vers le bas, par exemple quand un animal lui lance un coup de pied.

7. Dispositif selon les revendications 5 ou 6, caractérisé en ce que les vérins actionneurs sont des vérins pneumatiques.

8. Dispositif selon les revendications 5 ou 6, caractérisé en ce que les vérins actionneurs sont des vérins hydrauliques et/ou électromagnétiques ayant une protection contre les surcharges.
